# EUROPEAN PATENT APPLICATION

(11) **EP 4 749 988 A1**
(43) Date of publication of application: **27.05.2026**
(21) Application number: 24215109.0
(22) Date of filing: 25.11.2024
(51) Int. Cl.: H04L 9/08, H04L 9/40

(54) **QUANTUM KEY MANAGEMENT SYSTEM FOR NETWORK NODE, COMMUNICATION NETWORK, METHOD, COMPUTER PROGRAM**

(71) Applicant: Deutsche Telekom AG, 53113 Bonn (DE); Technische Universität München, 80333 München (DE)
(72) Inventor: GEITZ, Marc, 58089 Hagen (DE); NÖTZEL, Janis, 81829 München (DE); LI CALSI, Davide, 81829 München (DE); CHAUDHARY, Sumit, 81247 München (DE); CHOI, Jin Hyeock, 80799 München (DE)
(74) Representative: 2SPL Patentanwälte PartG mbB

(57) **Abstract**

Provided is a first network node for communicating with a second network node. The first network node includes circuitry configured to locally generate a first encryption key. The circuitry is further configured to communicate the first encryption key to the second network node via a first communication path. The circuitry is further configured to receive a second encryption key from the second network node via a second communication path. The second communication path involves at least one third network node different from a fourth network node of the first communication path. The circuitry is further configured to communicate encrypted payload data with the second network node. The encryption is based on a combination of the first and second encryption keys.

## Description

### Field

The present disclosure relates to a network node, a communication network, methods, and a computer program for securely forwarding a secret message among different nodes.

### Background

Quantum key distribution (QKD) may relate to a technology in which two participants (Alice and Bob) carry out a key exchange based on quantum mechanical principles. For example, Twin-Field (TF) or measurement device independent (MDI) QKD may use a third untrusted node (Charly) to exchange random numbers that may be used as encryption keys. In TF QKD, Alice and Bob may act as senders of weak optical signals, which may be brought into superposition at Charly's location. Charly may perform a measurement, based on which Alice and Bob may be able to reconstruct a common cryptographic key. Charly himself may be unable to learn anything about the key. In MDI QKD, instead of weak optical signals, single photons (or single photon quantum states) may be used which may be brought into superposition by Charly.

For performing QKD, different devices may be needed, such as single photon detectors, fiber optics, single photon sources or weak/attenuated laser sources, monitoring equipment are seen as state-of-the-art technology, and the like.

Generally, for cryptographic applications, key management systems may be used to manage the exchanged encryption keys and encryptors/applications may be used to encrypt payload data. An integration of QKD systems via KMS to a Layer1 encryption in optical transport networks may be employed, for example.

There may be a demand for an improved key forwarding scheme, e.g., for QKD systems.

### Summary

This demand may be satisfied by the subject-matter of the independent claims. Further embodiments or examples are given by the dependent claims, the drawings, and the following description.

According to a first aspect, the disclosure provides a first network node for communicating with a second network node. The first network node comprising circuitry configured to locally generate a first encryption key. The circuitry is further configured to communicate the first encryption key to the second network node via a first communication path. The circuitry is further configured to receive a second encryption key from the second network node via a second communication path. The second communication path involves at least one third network node different from a fourth network node of the first communication path. The circuitry is further configured to communicate encrypted payload data with the second network node. The encryption is based on a combination of the first and second encryption keys.

Thereby, a key forwarding scheme may be provided to forward a key over distances that are longer than a usual transport distance of optical fiber. If at least one node is honest, the scheme may be secure, thus providing a secure key forwarding scheme. Hence, in contrast to other key forwarding schemes, it is not necessary according to the present disclosure that each (intermediate) node must be trusted.

In some examples, the first communication path and the second communication path establish a ring network to communicate the first encryption key and the second encryption key between the first network node and the second network node.

Thereby, security may be further enhanced.

In some examples, the first communication path is a transmission path for the first network node and the second communication path is a reception path for the first network node.

Thereby, two different paths may be provided for two different keys that are fused to get a key, thereby adding randomness for both parties.

In some examples, the first communication path includes the fourth network node and the second communication path includes the third network node.

Thereby, a ring network may be established.

In some examples, the first node (or the circuitry) is further configured to generate a third encryption key based on quantum key distribution.

Thereby, security may be further enhanced by utilizing quantum key distribution.

In some examples, the third encryption key is generated based on relay-assisted quantum key distribution with a fifth network node in the first communication path.

Thereby, security may be further enhanced.

In some examples, for generating the third encryption key, the fourth network node serves as a relay for the relay-assisted quantum key distribution between the first network node and the fifth network node.

Thus, the fourth network node may be unable to retrieve the third key although it participates at the QKD scheme.

In some examples, the circuitry is further configured to generate a fourth key with the fourth network node based on point-to-point quantum key distribution.

Thereby, security may be further enhanced.

In some examples, the circuitry is further configured to encrypt the first encryption key with the third key and with the fourth key for communicating it to the second network node via the fourth network node in the first communication path.

Thereby, a key forwarding scheme may be provided that is unlikely to be compromised.

According to a second aspect, the disclosure provides a communication network comprising the first network node according to the first aspect, the second network node, the third network node, the fourth network node, and the fifth network node.

Thereby, a secure network for key forwarding over long distances may be provided.

In some examples, the second network node is configured to generate a fifth key with the fifth network node based on point-to-point quantum key distribution.

Thereby, similar effects as described above may be achieved.

In some examples, with respect to the first network node, a directly neighboring network node has access to at most one key for decrypting the first key. Furthermore, with respect to the second network node, a directly neighboring network node has access to at most one key for decrypting the second key.

Thus, no intermediate node may have access to all relevant keys, thereby enhancing security.

According to a third aspect, the disclosure provides a method for a first network node for communicating with a second network node. The method comprises locally generating a first encryption key. The method further comprises communicating the first encryption key to the second network node via a first communication path. The method further comprises receiving a second encryption key from the second network node via a second communication path. The second communication path involves at least one third network node different from a fourth network node of the first communication path. The method further comprises communicating encrypted payload data with the second network node. The encryption is based on a combination of the first and second encryption keys.

Thereby, similar effects as in the first and the second aspect may be achieved.

According to a fourth aspect, the disclosure provides a method for a communication network according to the second aspect. The method comprises, generating the first and the second encryption key. The method further comprises communicating the first encryption key from the first network node to the second network node via the first communication path and the second encryption key from the second network node to the first network node via the second communication path. The method further comprises. The method further comprises communicating the encrypted payload data between the first and the second network node. The encryption is based on a combination of the first and second encryption keys.

Thereby, similar effects as in the first and the second aspect may be achieved.

In some examples, the method further comprises forwarding the first encryption key, via the fourth network node in the first communication path, to the second network node. In such examples, the method further comprises forwarding the second encryption key, via the third network node in the second communication path, to the first network node.

Thereby, similar effects as in the first and the second aspect may be achieved.

According to a fifth aspect, the disclosure provides a computer program comprising instructions which, when executed on a computer, cause the computer to carry out the method(s) of any one of the third or the fourth aspect (or both).

### Brief description of the Figures

Some examples of apparatuses and/or methods will be described in the following by way of example only, and with reference to the accompanying figures, in which
Fig. 1 depicts a network according to the present disclosure;
Fig. 2 depicts a block diagram for a TF/MDI QKD network according to the present disclosure;
Fig. 3 depicts a key forwarding scheme according to the present disclosure;
Fig. 4 depicts a technical component view of the network of Fig. 1;
Fig. 5 depicts a communication network according to the present disclosure implemented as a ring;
Fig. 6 depicts a linearized version of the network of Fig. 5;
Fig. 7 depicts a first key forwarding scheme for the network of Fig. 5 (and Fig. 6) without using P2P QKD;
Fig. 8 depicts a second key forwarding scheme for the network of Fig. 5 (and Fig. 6) while using P2P QKD;
Fig. 9 depicts an example of an intermediate node and of an end node according to the present disclosure;
Fig. 10 depicts a flowchart of a method for a network node according to the present disclosure; and
Fig. 11 depicts a flowchart of a method for a communication network according to the present disclosure.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

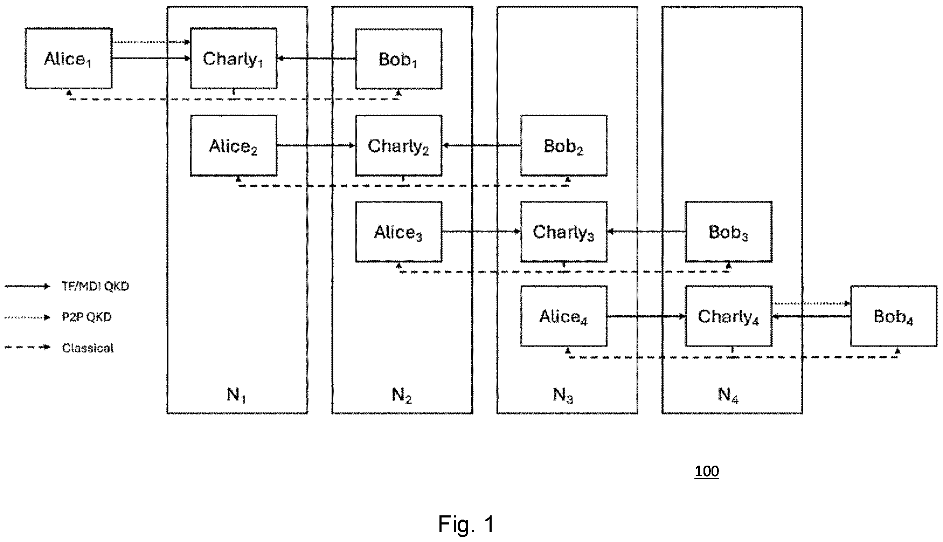

Fig. 1 depicts a (communication) network 100 comprising a plurality of network nodes. Although the embodiments of the present disclosure are primarily described with respect to a quantum key distribution (QKD) scheme, the present disclosure is not limited in that regard since it may be sufficient to provide a key forwarding scheme as described in the following based on different cryptographic contexts. In such a key forwarding scheme (or in more general: a message forwarding scheme) according to the present disclosure, different network nodes may be utilized to forward a (secret) key (or a message) to a recipient of the key (or the message) to carry out an encrypted communication between the generator and the recipient of the key. In the following, the generator of the key is referred to as "Alice" and the recipient is referred to as "Bob". If a third node is involved in generating a key (e.g., for twin-field QKD), this node is referred to as "Charly". According to the present disclosure, when the nodes of the network are used to forward the key, the key forwarding scheme may be based on the principle that the key is encrypted based on two different cryptographic contexts (e.g., keys) and, with respect to a first network node, a directly neighboring node may only be aware of (or has access to) at most one of the two cryptographic contexts. Thereby, the directly neighboring network node may decrypt the twice encrypted key based on a first cryptographic context (that the directly neighboring network node has access to), and re-encrypt the key based on a third cryptographic context, such that the key is again encrypted twice and forwarded to the next neighboring network node.

The following description is given in view of a "first network node". However, any node shown in Fig. 1 may serve as the first network node, as will be apparent from the following description. The first network node communicates in a sequence of network nodes in the network 100. The sequence of network nodes may be established for the key forwarding scheme, i.e., one node receives the encrypted key after the other, but this shall not exclude that a node communicates with any other node, e.g., with a non-directly neighboring network node in the sequence, but the key may be forwarded in a sequential manner.

The network may be any type of network, such as a communication network, as depicted in Fig. 1. Also, any network architecture may be used, such as a linear architecture, as depicted in Fig. 1, but also a circular (or ring-like) architecture, a star architecture, and the like may be employed, as long as the principles of the present disclosure may be applicable to the network architecture. For example, the network may be a mobile telecommunications network, a corporate/company/factory network, a private network, and the like. The network may be a distributed network which may need several nodes to (safely) forward a key since, according to the present disclosure, it may be possible to safely forward a key over a multitude of nodes in cases where this previously was not possible or less secure, such as in a QKD network.

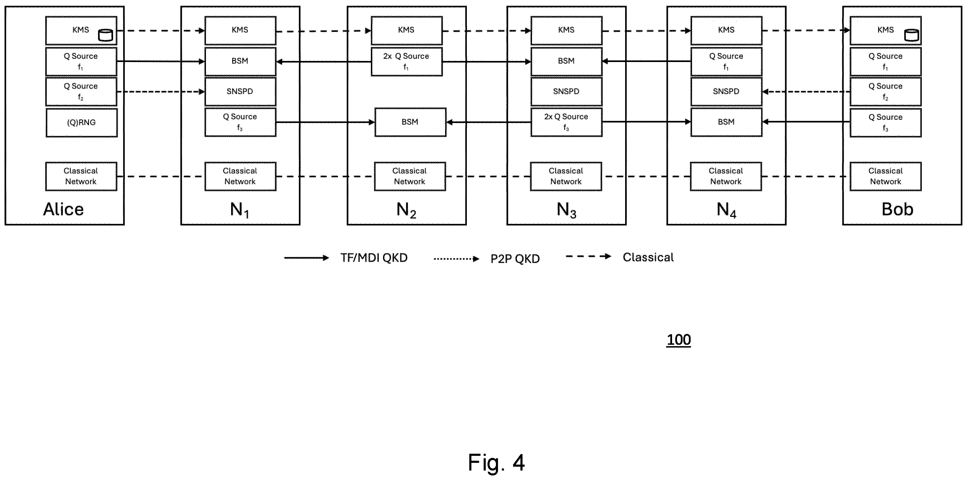

The first network node may include circuitry that carries out the principles of the present disclosure. The circuitry may include anything that allows for generating a cryptographic context. For example, if quantum cryptography is to be applied, circuitry that is specific for quantum cryptography may be utilized. For example, a quantum source, Bell state measurement circuitry, (single) photon detectors, and the like may be used, as will be discussed under reference of Fig. 4. On the other hand, if "classical" (i.e., non-quantum based) cryptography is used, the circuitry may include means for processing, which may be implemented using one or more processing units, one or more processing devices, any means for processing, such as a processor, a computer or a programmable hardware component being operable with accordingly adapted software. The processing circuitry may, for example, be implemented in software, which is then executed on one or more programmable hardware components. Such hardware components may comprise a general-purpose processor, a Digital Signal Processor (DSP), a micro-controller, a central processing unit (CPU), a graphics processing unit (GPU), or the like. It should be noted that also for a QKD scheme, "classical" components may be used, such as a processor for generating signals, for controlling the quantum-related circuitry, to evaluate signals, and the like. Furthermore, apart from quantum communication channels, classical communication channels may exist between the nodes, as depicted in Fig. 1 (dashed line).

Each node (or the "first node", as discussed above) is configured to generate a first cryptographic context with another node and a second cryptographic context with yet another node. Or, in other words, the processing circuitry is configured to generate a first cryptographic context with a second network node in a sequence, and further configured to generate a second cryptographic context with a third network node in the sequence.

A cryptographic context may relate to a cryptographic way in which two network nodes communicate with each other, such as a key, a key and a message, or the like. However, the cryptographic context does not need to be directly a key, but may indicate a key. For example, in twin-field QKD, a signal that is determined by the entities participating in the key generation may only indicate the key, such that the participants may derive the key from the signal. In such an example, the cryptographic context may be the signal, as will be discussed below.

As already discussed above, with respect to the first network node, a directly neighboring network node has access to at most one (i.e., zero or one) of the first and the second cryptographic contexts.

With respect to Fig. 1, if the node Alice1 is the first network node, Alice1 is configured to generate the first cryptographic context with the node N1 (i.e., its directly neighboring node), and the second cryptographic context with the node N2 (i.e., its indirectly neighboring node). In other words, in some examples, the second network node may be a direct neighbor of the first network node, and the third network node may be an indirect neighbor of the first network node and a direct neighbor of the second network node.

If a QKD scheme is used, as depicted in Fig. 1, Alice1 may perform point-to-point (P2P) QKD with the node N1. P2P QKD may enable two parties to establish a shared secret key through the transmission of quantum particles, e.g., photons, over a quantum channel. Alice1 may encode information into the quantum states of these photons, e.g., using properties like polarization, which may represent binary values (or other values since there may be several forms of polarization). As Alice1 sends the quantum particles to N1, the quantum states may remain delicate and highly sensitive to any observation or interception. N1 may receive the photons and measures them using chosen settings, some of which align with Alice1's setting, while others may not, thereby resulting in a partially matched set of bits. Afterwards, Alice1 and N1 may communicate over a public channel to identify which settings aligned and retain only the matching bits. Furthermore, error correction and privacy amplification may be performed to secure the final key. In this way, any attempt at eavesdropping would disturb the quantum states, alerting Alice and Bob to the presence of an interceptor, allowing them to verify the integrity of their shared key. However, if one of the two nodes participating in P2P QKD is compromised, the secret may not be safe.

As indicated above, a quantum channel may be used. A quantum channel may relate to a medium through which quantum information (e.g., in the form of quantum states) is transmitted. Unlike classical channels that carry conventional binary data, a quantum channel may be specifically designed to preserve the quantum properties of particles, such as superposition, entanglement, polarization, and the like, which may be essential for secure quantum communication methods like QKD. The quantum channel may be a physical fiber optic cable for photons or even free space, where photons travel through the air or vacuum. However, it may require extreme precision, as any noise or loss in the channel may disturb the quantum states, affecting the integrity of the transmitted information. Since quantum states may be highly sensitive, any interception or observation along the quantum channel may cause measurable disturbances, allowing for detection of potential eavesdroppers.

Furthermore, Alice1 may perform relay-assisted QKD (e.g., twin-field (TF) or measurement-device independent (MDI) QKD) with N2 (which may act as Bob1 for generation of the second cryptographic context), via N1 (which may act as Charly1 for generation of the second cryptographic context). TF QKD and MDI QKD may be based on similar principles. While TF QKD may rely on light waves, MDI QKD may rely on detection of single photons. To such schemes, it may also be referred to as relay-assisted QKD, in some examples. It should be noted that apart from TF QKD and MDI QKD, other types of relay-assisted QKD may be applied according to the present disclosure. It should be noted that the present disclosure is not limited to any QKD scheme. For example, additionally or alternatively one or more of CV (continuous variable) QKD (using weak coherent laser beams), squeezed light QKD (using squeezed state), or the like may be adopted.

In more detail, in TF QKD, the end nodes (Alice1 and Bob1 in this example) may communicate via a third untrusted node (Charly1 in this example) to exchange random numbers that can may then be used as encryption keys. In TF-QKD, Alice1 and Bob1 may act as senders of weak optical signals, which may be brought into superposition at Charly1's location and Charly1 may perform a measurement and generate an interference pattern. Based on the interference pattern Alice1 and Bob1 may be able to reconstruct a common cryptographic key since the knowledge of their own signal and the knowledge of the interference pattern may indicate what the signal of the respective other looks like. Charly1 himself may be unable to learn anything about the key since Charly1 may not know which signals Alice1 and Bob1 send - only the interference pattern. In other words, for generating the second cryptographic context, the second network node (i.e., Charly1 in this example) may serve as a relay for the relay-assisted quantum key distribution between the first network node and the third network node.

On the other hand, in MDI QKD, single photons may be sent by Alice1 and Bob1 to Charly1 which may bring them into superposition in a similar fashion as in TF QKD. In such a scenario, Charly1 may use (a) single photon detector(s) and Charly1 may communicate an output of the single photon detector(s) to Alice1 and Bob1 who may then reconstruct what the respective other sent. For example, Charly1 may perform a Bell state measurement (but the present disclosure is not limited in that regard), if the single photons are entangled. If a Bell state projection of the two entangled photons sent by Alice and Bob is detected by Charly, Charly may send this information to Alice and Bob which in turn may qualify these photons as candidates for the key bits.

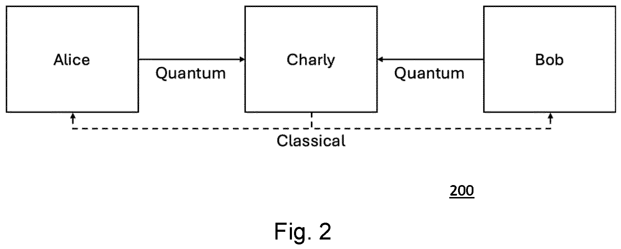

A setup for relay-assisted QKD is shown in Fig. 2. Fig. 2 depicts a block diagram for a TF/MDI QKD network 200 according to the present disclosure. As indicated above, Alice and Bob send quantum signals to Charly via a quantum channel. Moreover, the three nodes are connected via a classical (sifting) channel. As described above, Charly may be unaware of the key that Alice and Bob negotiate although Charly performs the measurement.

Hence, in this example where Alice1 is the first network node, N1 is the directly neighboring network node. However, N1 only has access to the first cryptographic context that is established based on P2P QKD with Alice1, but has no access to the second cryptographic context that is generated based on TF/MDI QKD between Alice1 and Bob1.

In some examples (e.g., if Alice1 is the first network node), the circuitry may be further configured to generate a message and encrypt the message based on the first cryptographic context and the second cryptographic context. For example, the message may be a key to be delivered to Bob4, but the principles of the present disclosure may be applicable to any type of message.

The circuitry may be further configured to communicate the encrypted message to the second network node (i.e., N1, in this example).

In another example, where N1 is the first network node, a first cryptographic context may be established/generated with Alice1 based on P2P QKD, as discussed above. A second cryptographic context may be established/generated with N3 (that acts as Bob2, in this example, while N1 acts as Alice2) based on TF/MDI QKD. In this example, Alice1 is a directly neighboring node to N1 and N2 is another directly neighboring node to N1. Alice1 only has access to the first cryptographic context, while N2 has access to none of the two cryptographic contexts. In more general terms, in such examples where N1 is the first network node, the second network node may be a direct neighbor of the first network node, and the third network node may be an indirect neighbor of the first network node.

In such examples where N1 is the first network node, the circuitry may be further configured to receive, from the second network (e.g., Alice1) node, an encrypted message that is encrypted based on the first cryptographic context and based on a further cryptographic context. In other words, as discussed above, the first cryptographic context may be based on a point-to-point quantum key distribution between the first network node and the second network node. Moreover, the second cryptographic context may be based on a relay-assisted quantum key distribution with the third network node, wherein the third network node is an indirect neighbor of the first network node.

In such examples where N1 is the first network node, the circuitry may be further configured to decrypt the encrypted message only based on the first cryptographic context to obtain the message encrypted based on the further cryptographic context. The circuitry may further be configured to re-encrypt the message based on the second cryptographic context (with respect to N1) to obtain the encrypted message based on the second cryptographic context and the further cryptographic context.

In another example, where N2 is the first network node, a first cryptographic context may be established/generated with Alice1 based on TF/MDI QKD, as discussed above. A second cryptographic context may be established/generated with N4 (that acts as Bob3, in this example, while N2 acts as Alice3) based on TF/MDI QKD. In this example, N1 is a directly neighboring node to N2 and N3 is another directly neighboring node to N2. Neither N1 nor N3 may have access to any of the first and the second cryptographic contexts (with respect to N2). However, N1 may serve as Charly1 (as a relay) for the TF/MDI QKD (relay-assisted QKD) with Alice1, and N3 may serve as Charly3 (as a relay) for the TF/MDI QKD (relay-assisted QKD) with N4.

Also, in such an example where N2 is the first network node, the encrypted message may be received from N1 (as a "fourth" network node and a direct neighbor) and forwarded (after partial encryption and re-encryption) to N3. In other words, the circuitry may be further configured to receive, from a fourth network node (N1 in this case), an encrypted message that is encrypted based on the first cryptographic context (between Alice1 and N2) and based on a further cryptographic context (between N1 and N3). As discussed above, the cryptographic context may be based on a relay-assisted quantum key distribution with the second network node (Alice1), and the second cryptographic context may be based on a relay-assisted quantum key distribution with the third network node (N4/Charly4 in this example, which may be an indirect neighbor). In such examples, the circuitry may be further configured to decrypt the encrypted message only based on the first cryptographic context to obtain the message encrypted based on the further cryptographic context. The circuitry may be further configured to re-encrypt the message based on the second cryptographic context to obtain the encrypted message based on the second cryptographic context and the further cryptographic context.

In another example, where N3 is the first network node, a first cryptographic context may be established/generated with N1 based on TF/MDI QKD, as discussed above. A second cryptographic context may be established/generated with Bob4 based on TF/MDI QKD. In this example, N2 is a directly neighboring node to N3 and N4 is another directly neighboring node to N3. Neither N2 nor N4 may have access to any of the first and the second cryptographic contexts. However, N2 may serve as Charly2 (as a relay) for the TF/MDI QKD (relay-assisted QKD) with N1, and N4 may serve as Charly4 (as a relay) for the TF/MDI QKD (relay-assisted QKD) with Bob4. If N3 is the first network node, it may be similar as the case where N2 is the first network node, such that it is referred to the explanations made for N2.

In another example, where N4 is the first network node, a first cryptographic context may be established/generated with N2 based on TF/MDI QKD, as discussed above. A second cryptographic context may be established/generated with Bob4 based on P2P QKD. In this example, Bob4 is a directly neighboring node to N4 and N3 is another directly neighboring node to N4. Bob4 may only have access to the second cryptographic context (established based on P2P QKD), while N3 may not have access to any of the first and the second cryptographic contexts, but N3 may serve as a relay for establishing the first cryptographic context. N4 may receive the encrypted message from N3, (partially) decrypt it based on the first cryptographic context, and re-encrypt it based on the second cryptographic context to forward it to Bob4.

In another example, where Bob4 is the first network node, a first cryptographic context may be established/generated with N3 (as a relay) based on TF/MDI QKD, as discussed above. A second cryptographic context may be established/generated with N4 based on P2P QKD. In this example, Bob4 may only have one directly neighboring that is N4. However, N4 may only have access to the second cryptographic context (established based on P2P QKD), but may serve as a relay for establishing the first cryptographic context between N3 and Bob4. Bob4 may receive the encrypted message from N4, and Bob4 has access to both cryptographic context, Bob4 may be able to decrypt the message. In other words, the circuitry may be configured to receive, from the second network node (N4 in this example), a message that is encrypted based on the first cryptographic context (between N3 and Bob4) and the second cryptographic context (between N4 and Bob4). The circuitry may be further configured to decrypt the message based on the first cryptographic context and the second cryptographic context.

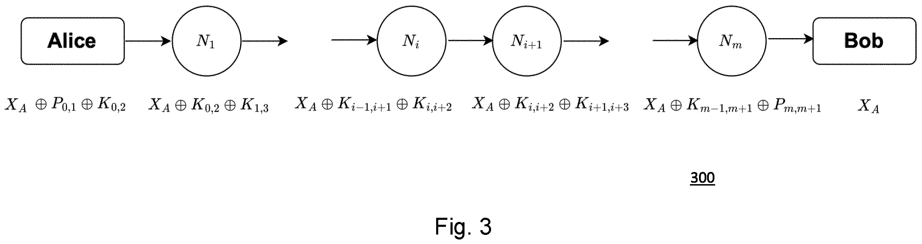

Fig. 3 depicts a key forwarding scheme 300 according to the present disclosure for an arbitrary number of nodes. A generator (Alice) of a message X_{A} encrypts the message X_{A} based on two cryptographic contexts (keys, in this example): *P*_{0,1} and *K*_{0,2}. The indices of the keys refer to the nodes between which the key has been generated. Furthermore, a key named *P*_{i,i+1} relates to a key generated based on P2P QKD between a node and a (directly) neighboring node. On the other hand, and a key named *K*_{*i,i*+*j*} relates to a key that is generated based on relay-assisted QKD between a node i and an indirectly neighboring node that is set j nodes apart from node I (e.g., j may be equal to or larger than two). Accordingly, for the first message generated by Alice, *P*_{0,1} relates to a key that is generated between Alice and N1 based on P2P QKD (Alice has the index 0), and *K*_{0,2} relates to a key that is generated between Alice and N2 based on TF/MDI QKD (with N1 as a relay).

Accordingly, Alice sends the message *X_{A}* ⊕ *P*_{0,1} ⊕ *K*_{0,2} to N1. N1 removes the key *P*_{0,1} from the message (e.g., based on XORing the message with *P*_{0,1}), and adds the key *K*_{1,3} (i.e., re-encrypt the message with *K*_{1,3}) for sending the newly encrypted message to N2. An arbitrary node in sequence Ni generates the message *X_{A}* ⊕ *K*_{*i*-1,*i*+1} ⊕ *K*_{*i*,*i*+2} and sends it to node Ni+1, which generates the message *X_{A}* ⊕ *K*_{*i,i*+2} ⊕ *K*_{*i*+1*,i*+3}. A penultimate node Nm (i.e., a node directly neighboring Bob) generates the message *X_{A}* ⊕ *K*_{*m*-1,*m*+1} ⊕ *P*_{*m*,*m*+1} and sends it to Bob (who has the index m+1).

A more mathematical description of Fig. 3 is given in the following: Assume Alice and Bob are connected with m intermediary nodes Ni for 1 ≤ i ≤ m. Alice may be denoted N₀ and Bob Nₘ₊₁. For 0 ≤ i ≤ m -1, each Nᵢ is directly connected with Nᵢ₊₁ and, with its help, can perform TF/MDI QKD with Nᵢ₊₁ to share a secret key K_{i,i+2}. With the following scheme, Alice and Bob may be able to share a secret without revealing it to the intermediary nodes Nᵢ. All intermediate secret keys may be of length n and may belong to {0,1}*ⁿ*. Although the following description is given with respect to "steps", the order of the steps is not necessarily limiting.

Step 1: Alice (and Bob) perform point-to-point QKD with N₁ (and Nₘ) to share a secret key P_{0,1} (and P_{m,m+i}) respectively.

Step 2: Alice, i.e., N₀, runs TF/MDI QKD with N₂ to share a secret key K_{0,2}. Similarly, for 1 ≤ i ≤ m -1, each Nᵢ performs TF/MDI QKD with Nᵢ₊₂ to share a secret key K_{i,i+2}. It should be noted how each node has two secret keys and at least one of them is not known to its immediate neighbor, i.e., the node(s) directly connected to itself.

Step 3: Alice draws a sequences of n uniformly random bits to generate a secret key X_{A} ∈ {0,1}*ⁿ* . Alice then performs an XOR operation to X_{A} with its secret keys to produce the message *M*₀ = *X_{A}* ⊕ *P*_{0,1} ⊕ *K*_{0,2}. Alice sends M₀ to the next node N₁.

Step 4: It should be noted that N₁ cannot retrieve X_{A} because it does not know K_{0,2}. Then N₁ again performs an XOR operation to M₀ with its secret keys to generate the new message *M*₁ = *M*₀ ⊕ *P*_{0,1} ⊕ *K*_{1,3} = *X_{A}* ⊕ *K*_{0,2} ⊕ *K*_{1,3} and forwards it to the next node N₂. With this operation, N₁ decrypts the received message M₀ with key P_{0,1} and encrypts it with K_{1,3}.

Step 5: For 1 ≤ i ≤ m -1, each Nᵢ receives from Nᵢ₋₁ the message *Mᵢ* = X_{A} ⊕ *K*_{*i*-2,*i*} ⊕ *K*_{*i*-1,*i*+1}. Then, Nᵢ performs an XOR operation to Mᵢ₋₁ with its secret key(s) to generate the new message *Mᵢ* = *M*_{*i*-1} ⊕ *K*_{*i*-2,*i*} ⊕ *K*_{*i,i*+2} = *X_{A}* ⊕ *K*_{*i*-1*,i*+1} ⊕ *K*_{*i,i*+2} and forwards it to the next node Nᵢ₊₁. Nᵢ decrypts the received message with the key K_{i-2,i} and encrypts it with K_{i,i+2}.

Step 6: Nₘ receives the message *M*_{*m*-1} = *X_{A}* ⊕ *K*_{*m*-2*,m*} ⊕ *K*_{*m*-1,*m*+1} from Nₘ₋₁. Nₘ performs an XOR operation with its secret key(s) to generate the new message *Mₘ* = *X_{A}* ⊕ *K*_{*m*-1,*m*+1} ⊕ *P*_{*m*,*m*+1} and forwards it to Bob (Nₘ₊₁). As before, Nₘ decrypts the received message Mₘ₋₁ with the key K_{m-2,m} and encrypts it with P_{m,m+1}.

Step 7: Bob receives *Mₘ* = X_{A} ⊕ *K*_{*m*-1,*m*+1} ⊕ *P*_{*m,m*+1} from Nₘ. Then, Bob can perform an XOR operation with its secret keys to decrypt the message to retrieve X_{A}. Thereby, Alice and Bob share the secret key K(A) = X_{A} for further communication (which may be communication via a classical channel).

In the above scheme, Alice (and Bob) uses its two secret keys for encryption (and decryption) and all the other intermediary nodes use one for encryption and one for decryption. In each forwarding step, an intermediary node receives a message where X_{A} is encrypted with two secret keys. The node knows only one of them, so it cannot retrieve X_{A}. With its two secret keys, the intermediary node removes one of them and adds a new secret key to protect X_{A} from the succeeding node. Then the new message is forwarded to the next node, where the same operation repeats again until the message reaches Bob.

According to the present disclosure, a key forwarding scheme is presented, e.g., for QKD systems, for distances that are larger than a transport distance of photons in fiber (e.g., ca. 100km). In conventional key forwarding schemes, Alice's random number may be encrypted/decrypted via QKD keys and transmitted from one QKD node to the next QKD node. However, in such known schemes, the random number may be exposed at the intermediate nodes of the QKD infrastructure. However, according to the present disclosure, the random number (or the "message") may remain encrypted with at least one cryptographic context (or key) at each node. In other words, none of the nodes (except for Alice and Bob) may be able to completely decrypt the message, but only to partially decrypt and re-encrypt the message.

Fig. 4 depicts a system component view of the communication network 100 of Fig. 1 for discussing which circuitry may be present in each node. It should be noted that "middle" nodes N2 and N3 may have the same elements. Moreover, Alice and Bob (Alice1 and Bob4, in Fig. 1) have the same elements and N1 and N4 have the same elements and a repetitive description of nodes with the same elements is omitted. Therefore, the description given for Alice likewise applies to Bob, the description given for N1 likewise applies to N4, and the description given for N2 likewise applies to N3.

In general, end nodes and intermediate nodes may include quantum and classical communication equipment. All nodes may have in common that they include a KMS (Key Management System), at least one Q Source (Quantum (Photonic) Source - e.g., for emitting a weak laser beam or single photons), and a classical network connection, e.g., for key sifting and key forwarding (from the own KMS to neighbor KMS) or for applying the present disclosure as a classical key forwarding scheme.

A KMS may be used to store the distributed QKD encryption keys safely. The KMS may take over the responsibility for the key forwarding process as outlined in the present disclosure. To do so, the KMS may require a (quantum) random number generator ((Q)RNG) and a secure database for the key storage, e.g., based on a Hardware Security Module (HSM) or based on a Physical Unclonable Function (PUF).

The quantum photonic source may include a laser configured to emit a weak laser beam (for TF QKD) or circuitry (e.g., including a laser and other optical elements) to act as a single photon source (for MDI QKD). The photon source(s) may operate on different frequencies to better incorporate them into a quantum photonic network setup.

Furthermore, each node that serves as a relay for relay-assisted QKD (e.g., each intermediate node N1 to N4) may be configured to perform a BSM (Bell State Measurement) to determine a Bell state of two entangled particles. BSM circuitry (or device) may include a beam splitter and (several) single photon detectors. BSM circuitry for a TF QKD scheme may include two (S)NSPDs ((superconducting) nanowire single photon detectors), while BSM circuitry for an MDI QKD scheme (e.g., with polarization encoded qubits) may include up to four SNSPDs (or even more).

In more detail, Alice includes circuitry for implementing a KMS and a database, as well as circuitry for performing classical network communication. Furthermore, Alice includes a first quantum source (of a first frequency f1) for relay-assisted QKD with N2 (via N1), and a second quantum source (of a second frequency f2) for P2P QKD with N1. Alice further includes a (Q)RNG. However, Alice (and Bob) does not need detection circuitry, such as an SNSPD or BSM circuitry. Thus, the key forwarding scheme (and the nodes) may be easily integrated into any existing endpoints (that may be additionally equipped with photon sources), e.g., based on integrated optics.

N1 includes a KMS and circuitry for performing classical network communication. Furthermore, N1 incudes BSM circuitry for acting as a Charly in the relay-assisted QKD between Alice and N2. N1 further includes an SNSPD for the P2P QKD with Alice. N1 also includes a quantum source (of a third frequency f3, but the present disclosure is not limited in that regard) for relay-assisted QKD with N3 (via N2).

N2 includes a KMS and circuitry for performing classical network communication. Furthermore, N2 incudes BSM circuitry for acting as a Charly in the relay-assisted QKD between N1 and N3. N2 further includes two quantum sources (of the first frequency f1): a first one for the relay-assisted QKD with Alice and a second one for the relay-assisted QKD with N4.

As stated above, N3 may have the same components as N2, but it should be noted that the quantum sources of N3 may emit a different light frequency (f3 in this example) than the quantum sources of N2. Furthermore, N3 may include an SNSPD. Also, the quantum source of N4 may emit a different frequency (f1 in this example, but it may also be another frequency f4) than the quantum source of N1 (f3 in this example). Furthermore, Bob may have three different quantum sources and no random number generator (in contrast to Alice), but the present disclosure is not limited in that regard and Alice and Bob may have the same elements, as described above.

The key forwarding scheme as described herein may be deployed by each KMS based on the classical (transport) network connection. The required QKD keys may be sifted by the QKD systems and transferred to the respective next KMS in the sequence, where they may be stored in a secure key storage (e.g., a safe database) for later use.

During the key forwarding process, Alice may generate a random number using its local QRNG. The random number may be handed over to the local KMS, where the key forwarding of the present disclosure may be initiated. The KMS may further store the random number as encryption key in its local key storage system.

Bob may receive and decode the signal sent from Alice during the key forwarding scheme of the present disclosure and store the received random number as encryption key in its local key storage system. For example, additionally, Alice and Bob may also use an identifier to be stored together with the key, such as a random number identifier (RNDID) in accordance with the ETSI-014 protocol.

Applications on Alice and Bob's side may retrieve the same encryption key from their local key storage systems on both sides and use it to create a symmetrical, quantum-secure encrypted communication channel between them (e.g., based on the standardized ETSI-QKD004 protocol or ETSI-QKD014 protocol).

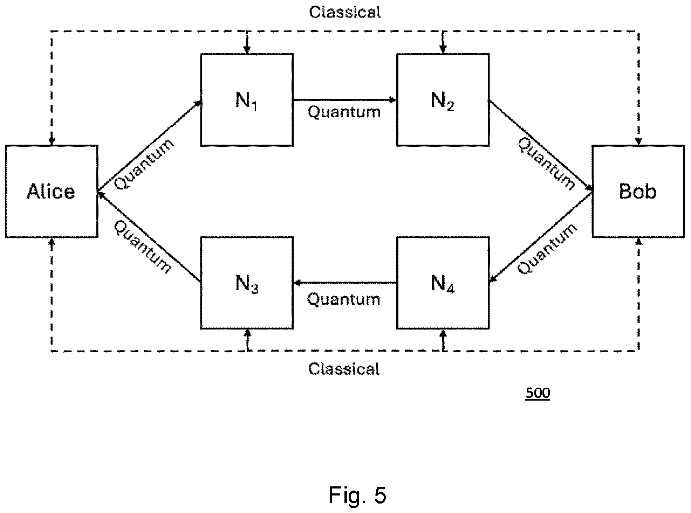

Fig. 5 depicts a communication network 500 which is implemented as a ring (instead of linear as the network described under reference of Figs. 1 to 4). The network 500 has two paths: a first path from Alice to Bob, and a second path from Bob to Alice. Thereby, Alice can send a random number to Bob via the first path, and Bob can send a random number to Alice via the second path. In other words, the first communication path may be a transmission path for Alice and the second communication path may be a reception path for Alice. On the other hand, the first path may be a reception path for Bob, and the second path may be a transmission path for Bob. Together, the two random numbers may serve as a common key. Such an approach may further increase security since both paths may need to be compromised for a successful eavesdropping.

The following description of Figs. 5 to 10 is given with respect to a first to fifth network node, which may always be the same (in contrast to the first/second/third/fourth network nodes of Figs. 1 to 4). In the following, the first network node is Alice, the second network node is Bob, the third network node is either one of N3 or N4 (or both), the fourth network node is N1, and the fifth network node is N2. It should be noted that Bob may be the first node and Alice may be the second node.

Moreover, different keys are mentioned (first to fifth key). In the following, the first key is X_{A}, the second key is X_{B}, the third key is K_{B,1}, the fourth key is P_{A,1}, and the fifth key is P_{B,2}. The indices of the keys result from the nodes participating in the generation of the keys, as described above. Further keys may be present, as well, as will be apparent from the following description.

Returning to Fig. 5, the network 500 includes a first network node (Alice) for communicating with a second network node (Bob). The communication network 500 further includes the third network node (N3/N4), the fourth network node (N1), and the fifth network node (N2).

The first network node includes circuitry configured to locally generate a first encryption key (X_{A}). As described above, Alice may use a (e.g., quantum) random number generator for locally generating the key. "Locally generating" may refer to generation of the key by Alice itself (e.g., without involving external sources, without limiting the present disclosure in that regard).

The circuitry is further configured to communicate the first encryption key to the second network node (Bob) via the first communication path (the upper path in Fig. 5). As indicated above, the first key (or random) may be encrypted for communicating it via the first path. Furthermore, a classical channel may be used for that purpose.

The circuitry is further configured to receive a second encryption key (X_{B}) from the second network node (Bob) via a second communication path (the lower path in Fig. 5).

The second communication path involves at least one third network node (N3 or N4) different from a fourth network node (N1) of the first communication path. In other words, the network nodes N3 and N4 of the second path should be physically distinct/different nodes than the network nodes N1 (and N2) of the first path. In view of the communication paths, the first communication path may include the fourth network node and the second communication path may include the third network node. Thereby, the ring-structure of the network 500 may be provided. In other words, in some examples, the first communication path and the second communication path establish a ring network to communicate the first encryption key and the second encryption key between the first network node and the second network node.

The circuitry is further configured to communicate payload data with the second network node based on a combination of the first and second encryption keys (e.g., based on a concatenation of the keys, based on XORing the keys, or the like).

Payload data may refer to the part of a data packet that contains an actual message or information for the recipient, excluding any headers or metadata used for routing and processing. However, in some examples, also headers and metadata may be encrypted.

As indicated above, Alice (and Bob) may encrypt their random numbers for transmission over the respective paths. Accordingly, they (or their circuitry) may be configured to configured to generate a third encryption key based on quantum key distribution (e.g., at least one of P2P, TF, MDI, or the like). For example, Alice may carry out relay-assisted QKD with N2 (as a fifth network node in the first communication path). In such an example, the fourth network node (i.e., N1) may serve as a relay for the relay-assisted quantum key distribution between the first network node (Alice) and the fifth network node (N2).

In some examples, the circuitry is further configured to generate a fourth key with the fourth network node based on point-to-point quantum key distribution.

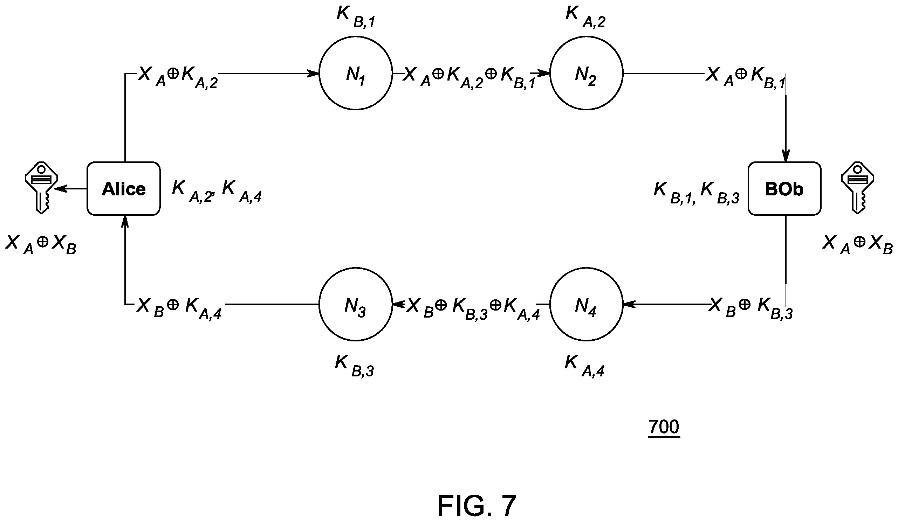

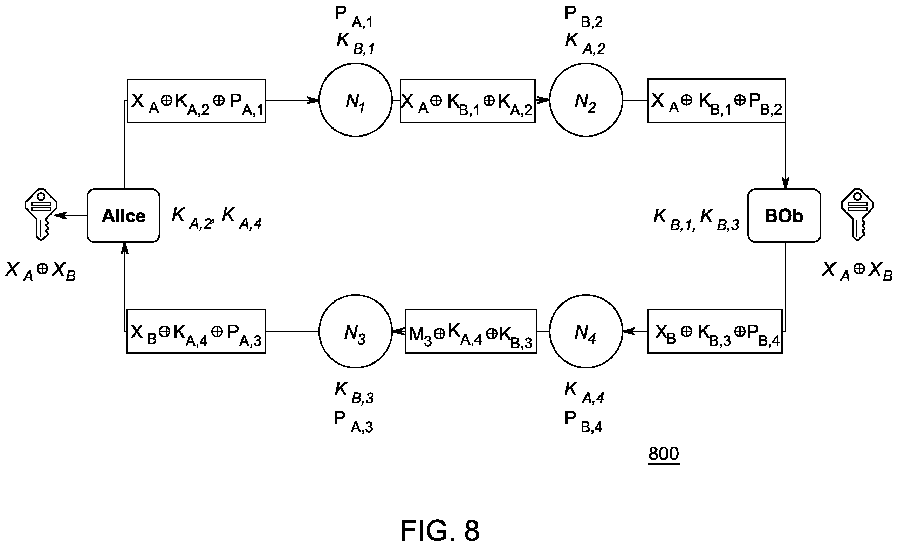

In some examples, the circuitry is further configured to encrypt the first encryption key with the third key and with the fourth key for communicating it to the second network node via the fourth network node (and in some examples, via the fifth network node) in the first communication path. However, in some examples, it is not necessary to encrypt the first key with both the third and the fourth key, as will be discussed under reference of Fig. 7. On the other hand, in the example of Fig. 8, both keys may be used to encrypt the first key.

Similar to Alice, Bob (second network node) may be configured to generate a fifth key with the fifth network node (N2) based on point-to-point quantum key distribution, such that Bob may be able to decrypt the message.

In the example of Fig. 5, similar principles apply as described under reference of Figs. 1 to 4: With respect to Alice, a directly neighboring network node (N1 or N3) may have access to at most one key for decrypting the first key. With respect to the Bob, a directly neighboring network node (N2 or N4) may have access to at most one key for decrypting the second key.

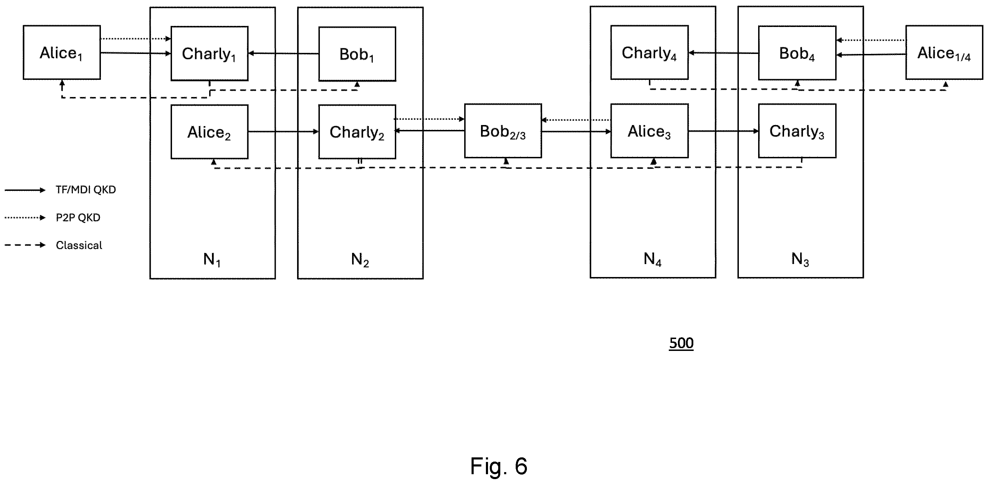

Fig. 6 depicts a linearized version of the network 500 in a similar fashion as Fig. 1. However, it should be noted that due to the ring shape, Alice is the two end nodes and Bob is a middle node.

Fig. 7 depicts a key forwarding scheme 700 according to the present disclosure without using P2P QKD by Alice and Bob and only using relay-assisted QKD (in the following, it is only referred to TF QKD, but any relay-assisted QKD may be used).

Step 1: Each node (including Alice and Bob) performs TF-QKD with the node that is two positions ahead in the network topology. That is, Alice performs TF-QKD with N₂, N₁ with Bob, and so on. The resulting keys are K_{A,2}, K_{A,4}, K_{B,1}, K_{B,3} ∈ {0, 1}^{n.1}

Step 2: Alice and Bob draw two independent sequences of n uniformly random bits X_{A}, X_{B} ∈ {0, 1}ⁿ.

Step 3: Alice sends M₀ = X_{A} ⊕ K_{A,2} to N₁.

Step 4: N₁ computes M₁ = Mo ⊕ K_{B,1} = X_{A} ⊕ K_{A,2} ⊕ K_{B,1} and sends it to N₂.

Step 5: N₂ computes M₂ = M₁ ⊕ K_{A,2} = X_{A} ⊕ K_{B,1} and sends it to Bob.

Step 6: Bob computes X_{A} = M ⊕ K_{B,1} and stores the key K(B) = X_{B} ⊕X_{A}. Then, he sends M₃ = X_{B} ⊕K_{B,3} to N₄.

Step 7: N₄ computes M₄ = M₃ ⊕ K_{A,4} = X_{B} ⊕ K_{B,3} ⊕ K_{A,4} and sends it to N₃.

Step 8: N₃ computes M₅ = M₄ ⊕ K_{B,3} = X_{B} ⊕ K_{A,4} and sends it to Alice.

Step 9: Alice computes X_{B} = Ms ⊕ K_{A,4} and outputs the key K(A) = X_{A} ⊕ X_{B}.

From a high-level viewpoint, the final shared key may be based on the XOR of two independent random bitstrings X_{A} and X_{B}. This feature may be desirable because, in some scenarios, both parties may want to add some randomness to the new key (as in Diffie-Hellman's scheme). The parties may use each branch/path of the ring to exchange one the respective keys. In the upper branch (first path), Alice may send X_{A} to Bob by passing through N₁ and N₂. Furthermore, the final key is not just a (random) number produced by one of the parties, but a combination of two (random) numbers. Therefore, if an attacker would get hold of only one of the keys, it would not be possible to decrypt payload based on that key. As shown in Fig. 7, each node may apply one new key (e.g., via One Time Pad (OTP)). The properties of OTP may ensure that XORing the ciphertext with a previously applied key cancels it out, as desired. The scheme may remain secure if at least one node is not corrupted and refuses to collaborate with the others. Due to the symmetry of the network and the protocol, it may suffice to pick one fixed node, e.g., N₁, and show that even if all other nodes maliciously collaborate, they may be powerless. Accordingly, if only one of X_{A} and X_{B} is unknown to the adversary, the whole key may be a strong secret (i.e., it has maximal entropy). In the following, it will be proved that X_{A} remains a secret. For this purpose, it is assumed that N₁ is honest (and Bob is too). The key K_{B,1} between N₁ and Bob may be a strong secret to N₂ and any eavesdropper. Assuming N₂ cannot eavesdrop on the communication between Alice and N₁, the incoming message M₁ may be encrypted with K_{B,1} through OTP. Thus, N₂ may be ignorant about X_{A}. The same may hold true for N₃ and N₄, due to the security of QKD against eavesdroppers. Finally, it may remain to check that the protocol is correct too. With honest participants, it may be trivial to verify that K(A) = K(B) = X_{A} ⊕ X_{B}.

Fig. 8 depicts a further key forwarding scheme 800 in which P2P QKD is additionally employed.

As described under reference of Fig. 7, if N₂ is eavesdropping on the link between Alice and N₁, it may obtain X_{A}. That is, even if N₁ is honest, N₂, N₃, and N₄ may form a coalition and break the protocol on their own. However, it has been recognized that, because Alice and N₁ are adjacent nodes, they may perform P2P QKD. Once they used P2P QKD to distill a key P_{A,1}, Alice may XOR it with (X_{A} ⊕ K_{A,2}) and send X_{A} ⊕ K_{A,2} ⊕ P_{A,1} to N₁ (as Mo). N₁ may remove P_{A,1} upon reception, then proceeds with the (regular) protocol described above. By the unconditional security of QKD, this may suffice to ensure that N₂ cannot recover X_{A} from M₁. Furthermore, due to the protocol's symmetry, the same may happen between Alice and N₃, Bob and N₂, and Bob and N₄. In the following, a modified protocol is given:
Step 1: Each node (including Alice and Bob) performs TF-QKD with the node that is two positions ahead in the network topology. That is, Alice performs TF-QKD with N₂, N₁ with Bob, and so on. The resulting keys are K_{A,2}, K_{A,4}, K_{B,1}, K_{B,3} ∈ {0, 1}".
Step 2: Alice performs point-to-point QKD with N₁ and N₃, obtaining secrets P_{A,1} and P_{A,3}. Bob performs point-to-point QKD with N₂ and N₄, obtaining secrets P_{B,2} and P_{B,4}.
Step 3: Alice and Bob draw two independent sequences of n uniformly random bits X_{A}, X_{B} ∈ {0, 1}ⁿ.
Step 4: Alice sends Mo = X_{A} ⊕ K_{A,2} ⊕ P_{A,1} to N₁.
Step 5: N₁ computes M₁ = Mo ⊕ K_{B,1} ⊕ P_{A,1} = X_{A} ⊕ K_{B,1} ⊕ K_{A,2}, sends it to N₂.
Step 6: N₂ computes M₂ = M₁ ⊕ K_{A,2} ⊕ P_{B,2} = X_{A} ⊕ K_{B,1} ⊕ P_{B,2}, sends it to Bob.
Step 7: Bob computes X_{A} = M₂ ⊕ K_{B,1} ⊕ P_{B,2}, stores the key K(B) = X_{B} ⊕ X_{A}. Bob sends M₃ = X_{B} ⊕ K_{B,3} ⊕ P_{B,4} to N₄.
Step 8: N₄ computes M₄ = M₃ ⊕ K_{A,4} ⊕ P_{B,4} = M₃ ⊕ K_{A,4} ⊕ K_{B,3}, sends it to N₃.
Step 9: N₃ computes M₅ = M₄ ⊕ K_{B,3} ⊕ P_{A,3} = X_{A} ⊕ K_{A,4} ⊕ P_{A,3}, sends it to Alice.
Step 10: Alice computes X _{B} = Ms ⊕ K_{A,4} ⊕ P_{A,3}, outputs the key K(A) = X_{A} ⊕ X_{B} .

Hence, all four intermediate nodes might need to collaborate to leak the final key. It should be noted that the steps do not necessarily need to be carried out after one another. The ordering may be changed or the steps may run in parallel.

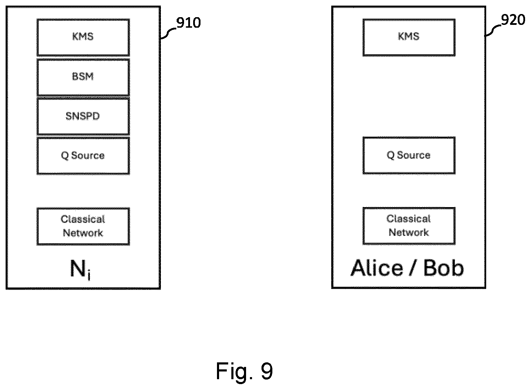

Fig. 9 depicts an intermediate node Nᵢ 910, as well as an end node Alice and Bob 920. In the following, it will be briefly described, which components the nodes 910 and 920 may include.

The intermediate nodes N₁ to N₄ may need hardware required to drive a quantum channel, i.e. the single photon detectors, the equipment to conduct Bell State Measurements, and the like, as already described above.

An intermediate node 910 may include a KMS, BSM, an SNSPD, a Q-Source or weak laser source, a classical network (e.g., including classical network connection and transponders). Not shown is a time synchronization system, e.g., a slave clock system to ensure proper system timing. A Timing & Clock system may be used for time synchronization, required to acquire proper photon timing to achieve interference of the weak laser pulses or single photons required by the QKD protocols at the central Charly node.

On the other hand, end nodes (Alice and the Bob) may only require sender equipment, which may be easier to integrate into legacy transport network nodes. A typical Alice / Bob node may include a Q-Source (e.g., a photonic weak laser source (for TF-QKD) or a single photon source (for MDI QKD)), classical network equipment, a KMS, and a Timing & (slave) Clock system, but not necessarily SNSPDs or BSM equipment. It should further be noted that a photon source may be provided in an integrated way (e.g., a computer/network card).

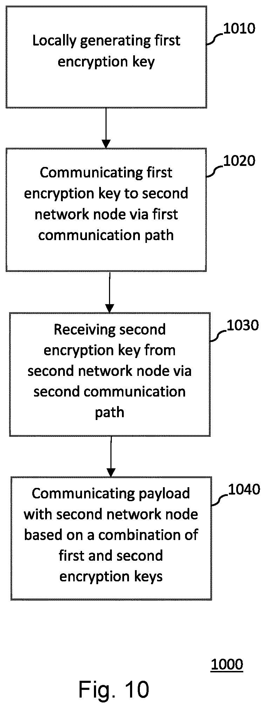

Fig. 10 depicts a flowchart of a method 1000 for a first network node for communicating with a second network node. The method 1000 includes locally generating, 1010, a first encryption key. The method 1000 further includes communicating, 1020, the first encryption key to the second network node via a first communication path. The method 1000 further includes receiving, 1030, a second encryption key from the second network node via a second communication path. The second communication path involves at least one third network node different from a fourth network node of the first communication path. The method 1000 further includes communicating, 1040, payload data with the second network node based on a combination of the first and second encryption keys (e.g., X_{A} XOR X_{B}).

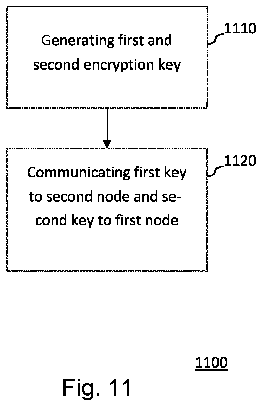

Fig. 11 depicts a flowchart of a method 1100 for a communication network according to the present disclosure. The method 1100 includes, generating, 1110, a first and a second encryption key. The method 1100 further includes communicating, 1120, the first encryption key from the first network node to the second network node via the first communication path and the second encryption key from the second network node to the first network node via the second communication path. The method 1100 further includes communicating, 1140, encrypted payload data between the first and the second network node. The encryption is based on a combination of the first and second encryption keys.

According to the present disclosure, at least the following effects may be achieved:
No trusted nodes: Intermediate nodes need not be subject to "dedicated trust". The application of the present disclosure might not expose any cryptographic artifact on the intermediate nodes, thus significantly reducing the trust requirements on a "state-of-the-art trusted QKD node chain". In other words: no trustworthy information stays unencrypted on any intermediate node.

Performance: High key rate across the chain of intermediate nodes. The key rate across the chain of QKD nodes may depend on the rate of the slowest QKD link. Figure 9 depicts a graph 900 showing a simulation of the achievable QKD rates vs. line length (or distance). In Fig. 9, P2P QKD and TF QKD is compared to the application of the present disclosure ("This work") with different numbers m of equidistant nodes that are used (apart from Alice and Bob).

Resilience: The scheme (or protocol) may be resilient to cheating/eavesdropping by individual intermediate QKD nodes, if at least one intermediate node is honest. It may be rather unlikely that all intermediate nodes are subject to an attack. Malicious network nodes may become a more significant threat to large scale network deployments, because intrusion management may be challenging. It might not even be possible to become aware that a network node is compromised and intruders are active on the system. However, according to the present disclosure, the scheme may be secure as long as two neighboring nodes in the QKD chain are secure. The scheme may tolerate the loss of one trusted QKD entity along the chain while remaining secure.

Cost efficiency: No quantum communication receiving equipment may be necessary at the QKD end nodes. Quantum communication equipment may be expensive (e.g., several 10k€ per equipment) and complex to integrate into existing communication network nodes. The disclosed method may achieve the effect that the sending and receiving classical communication nodes (Alice and Bob) may not require any quantum communication receiving equipment, hence no expensive single photon detection systems or other circuitry. The end nodes may only use sending equipment. In case of TF-QKD, using weak laser beam, traditional classical sender equipment may even be reused.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A first network node (Alice) for communicating with a second network node (Bob), the first network node (Alice) comprising circuitry configured to:
locally generate a first encryption key (X_{A});
communicate the first encryption key (X_{A}) to the second network node (Bob) via a first communication path;
receive a second encryption key (X_{B}) from the second network node (Bob) via a second communication path, wherein the second communication path involves at least one third network node (N3, N4) different from a fourth network node (N1) of the first communication path; and
communicate encrypted payload data with the second network node (Bob), wherein the encryption is based on a combination of the first (X_{A}) and second encryption keys (X_{B}).

2. The first network node (Alice) of claim 1, wherein the first communication path and the second communication path establish a ring network to communicate the first encryption key (X_{A}) and the second encryption key (X_{B}) between the first network node (Alice) and the second network node (Bob).

3. The first network node (Alice) of claim 1 or 2, wherein the first communication path is a transmission path for the first network node (Alice) and the second communication path is a reception path for the first network node (Alice).

4. The first network node (Alice) of claim 3, wherein the first communication path includes the fourth network node (N1) and the second communication path includes the third network node (N3, N4).

5. The first network node (Alice) of any one of claims 1 to 4, wherein the circuitry is further configured to generate a third encryption key (K_{A,2}) based on quantum key distribution.

6. The first network node (Alice) of claim 5, wherein the third encryption key (K_{A,2}) is generated based on relay-assisted quantum key distribution with a fifth network node (N2) in the first communication path.

7. The first network node (Alice) of any one of claims 1 to 6, wherein the circuitry is further configured to:
generate a fourth encryption key (P_{A,1}) with the fourth network node (N1) based on point-to-point quantum key distribution.

8. The first network node (Alice) of claim 7, wherein the circuitry is further configured to:
encrypt the first encryption key (X_{A}) with the third encryption key (K_{A,2}) and with the fourth encryption key (P_{A,1}) for communicating it to the second network node (Bob) via the fourth network node (N1) in the first communication path.

9. A communication network (500) comprising the first network node (Alice) according to any one of claims 1 to 8, the second network node (Bob), the third network node (N3, N4), the fourth network node (N1), and the fifth network node (N2).

10. The communication network (500) of claim 9, wherein the second network node (Bob) is configured to generate a fifth encryption key (P_{B,2}) with the fifth network node (N2) based on point-to-point quantum key distribution.

11. The communication network (500) of claim 9 or 10,
wherein, with respect to the first network node (Alice), a directly neighboring network node (N1, N3) has access to at most one encryption key for decrypting the first encryption key (X_{A}),
and wherein, with respect to the second network node (Bob), a directly neighboring network node (N2, N4) has access to at most one encryption key for decrypting the second key (X_{B}).

12. A method (1000) for a first network node for communicating with a second network node, the method comprising:
locally generating (1010) a first encryption key;
communicating (1020) the first encryption key to the second network node via a first communication path;
receiving (1030) a second encryption key from the second network node via a second communication path, wherein the second communication path involves at least one third network node different from a fourth network node of the first communication path; and
communicating (1040) encrypted payload data with the second network node, wherein the encryption is based on a combination of the first and second encryption keys.

13. A method (1100) for a communication network according to any one of claims 9 to 11, the method comprising, by the first network node:
generating (1110) the first and the second encryption key;
communicating (1120) the first encryption key from the first network node to the second network node via the first communication path and the second encryption key from the second network node to the first network node via the second communication path; and
communicating (1140) the encrypted payload data between the first and the second network node, wherein the encryption is based on a combination of the first and second encryption keys.

14. The method of claim 13, further comprising:
forwarding the first encryption key, via the fourth network node in the first communication path, to the second network node; and
forwarding the second encryption key, via the third network node in the second communication path, to the first network node.

15. A computer program comprising instructions which, when executed on a computer, cause the computer to carry out the method (1000; 1100) of any one of claims 12 to 14.

## Amended claims

### Amended claims in accordance with Rule 137(2) EPC.

1. A first network node (Alice) for communicating with a second network node (Bob), the first network node (Alice) comprising circuitry configured to:
locally generate a first encryption key (X_{A});
communicate the first encryption key (X_{A}) to the second network node (Bob) via a first communication path;
receive a second encryption key (X_{B}) from the second network node (Bob) via a second communication path, wherein the second communication path involves at least one third network node (N3, N4) different from a fourth network node (N1) of the first communication path; and
communicate encrypted payload data with the second network node (Bob), wherein the encryption is based on a combination of the first (X_{A}) and second encryption keys (X_{B}), wherein the first communication path and the second communication path establish a ring network to communicate the first encryption key (X_{A}) and the second encryption key (X_{B}) between the first network node (Alice) and the second network node (Bob).

2. The first network node (Alice) of claim 1, wherein the first communication path is a transmission path for the first network node (Alice) and the second communication path is a reception path for the first network node (Alice).

3. The first network node (Alice) of claim 2, wherein the first communication path includes the fourth network node (N1) and the second communication path includes the third network node (N3, N4).

4. The first network node (Alice) of any one of claims 1 to 3, wherein the circuitry is further configured to generate a third encryption key (K_{A,2}) based on quantum key distribution.

5. The first network node (Alice) of claim 4, wherein the third encryption key (K_{A,2}) is generated based on relay-assisted quantum key distribution with a fifth network node (N2) in the first communication path.

6. The first network node (Alice) of any one of claims 1 to 5, wherein the circuitry is further configured to:
generate a fourth encryption key (P_{A,1}) with the fourth network node (N1) based on point-to-point quantum key distribution.

7. The first network node (Alice) of claim 6, wherein the circuitry is further configured to:
encrypt the first encryption key (X_{A}) with the third encryption key (K_{A,2}) and with the fourth encryption key (P_{A,1}) for communicating it to the second network node (Bob) via the fourth network node (N1) in the first communication path.

8. A communication network (500) comprising the first network node (Alice) according to any one of claims 1 to 7, the second network node (Bob), the third network node (N3, N4), the fourth network node (N1), and the fifth network node (N2).

9. The communication network (500) of claim 8, wherein the second network node (Bob) is configured to generate a fifth encryption key (P_{B,2}) with the fifth network node (N2) based on point-to-point quantum key distribution.

10. The communication network (500) of claim 8 or 9,
wherein, with respect to the first network node (Alice), a directly neighboring network node (N1, N3) has access to at most one encryption key for decrypting the first encryption key (X_{A}),
and wherein, with respect to the second network node (Bob), a directly neighboring network node (N2, N4) has access to at most one encryption key for decrypting the second key (X_{B}).

11. A method (1000) for a first network node for communicating with a second network node, the method comprising:
locally generating (1010) a first encryption key;
communicating (1020) the first encryption key to the second network node via a first communication path;
receiving (1030) a second encryption key from the second network node via a second communication path, wherein the second communication path involves at least one third network node different from a fourth network node of the first communication path; and
communicating (1040) encrypted payload data with the second network node, wherein the encryption is based on a combination of the first and second encryption keys, wherein the first communication path and the second communication path establish a ring network to communicate the first encryption key (X_{A}) and the second encryption key (X_{B}) between the first network node (Alice) and the second network node (Bob).

12. A method (1100) for a communication network according to any one of claims 8 to 10, the method comprising, by the first network node:
generating (1110) the first and the second encryption key;
communicating (1120) the first encryption key from the first network node to the second network node via the first communication path and the second encryption key from the second network node to the first network node via the second communication path; and
communicating (1140) the encrypted payload data between the first and the second network node, wherein the encryption is based on a combination of the first and second encryption keys.

13. The method of claim 12, further comprising:
forwarding the first encryption key, via the fourth network node in the first communication path, to the second network node; and
forwarding the second encryption key, via the third network node in the second communication path, to the first network node.

14. A computer program comprising instructions which, when executed on a computer, cause the computer to carry out the method (1000; 1100) of any one of claims 11 to 13.
